## Europäisches Patentamt

## European Patent Office

## Office européen des brevets

(19)

(11) Numéro de publication: **0 162 805**
**B1**

(12)

# FASCICULE DE BREVET EUROPEEN

(45) Date de publication du fascicule du brevet:
**26.08.87**

(21) Numéro de dépôt: **85810170.2**

(22) Date de dépôt: **17.04.85**

(51) Int. Cl.⁴: **A 23 K 1/08,** A 23 L 1/172,
B 65 G 69/20, A 23 K 1/00,
A 23 K 1/165, A 23 C 9/12,
C 12 C 1/04

(54) **Aliment complémentaire lacto-remplaceur et graines germées.**

(30) Priorité: **19.04.84 CH 1975/84**
**03.07.84 CH 3190/84**
**20.12.84 CH 6056/84**

(43) Date de publication de la demande:
**27.11.85 Bulletin 85/48**

(45) Mention de la délivrance du brevet:
**26.08.87 Bulletin 87/35**

(84) Etats contractants désignés:
**AT BE DE FR GB IT LU NL**

(56) Documents cités:
**DE - A - 274 916**
**DE - A - 2 625 334**
**DE - A - 2 627 741**
**FR - A - 1 531 378**
**US - A - 1 554 913**

(73) Titulaire: **Schmutz, Pierre-André, Moulin de Pompaples,
CH-1349 Pompaples (CH)**

(72) Inventeur: **Schmutz, Pierre-André, Moulin de
Pompaples, CH-1349 Pompaples (CH)**
Inventeur: **Ropraz, Claude, Le Noyer, CH-1631 Sorens
(CH)**
Inventeur: **Ricci, Jean-Louis, Rue de l'Industrie 12,
CH-1373 Chavornay (CH)**

(74) Mandataire: **Mohnhaupt, Dietrich et al, DIETLIN,
MOHNHAUPT & Cie S.A. Rue des Epinettes 19,
CH-1227 Genève (CH)**

ACTORUM AG

## Description

L'invention a pour objet des graines de céréales prétraitées d'une certaine façon, en tant qu'aliment complémentaire lacto-remplaceur.

La présente invention concerne également une nouvelle matière biologique constitué par un mélange de graines germées, utilisable notamment comme substance alimentaire pour animaux, en particulier pour les animaux de ferme tels que chevaux, vaches, veaux, génisses, porcs, chèvres, moutons, volaille etc.

L'invention a encore pour objet un procédé d'engraissement des veaux de boucherie qui se fonde sur une nouvelle utilisation d'une matière fourragère, à savoir des grains mentionnées.

D'autres objets de la présente invention sont un procédé et une installation pour la germination des graines, en vue de préparer les aliments mentionnés.

Il est bien connu que le consommateur préfère la viande de veau blanche à la viande de veau rouge. Cette viande blanche est obtenue en supprimant l'action du système de rumination de l'animal, par l'engraissement au moyen des aliments à base de lait exclusivement.

On constate cependant, lorsqu'un veau à dépassé le moment de sévrage, qu'il recherche des aliments solides tels que foins, paille, débris végétaux etc. parce que la nature veut installer la fonction de rumination. Ces recherches sont donc normales et sont l'apanage des jeunes bovins ruminant dès l'age de 15 jours, avec un paroxysme vers 60 à 70 jours. Ces besoins sont physiologiques, voire mécaniques. Les tours de rumination sont alors, dans des engraissements normaux, de 45 à 55 coups; on constate des risques par oxygénation exagérée du bol alimentaire. De toutes façons, les animaux s'énervent par désir de ruminer et n'y pouvant pas parvenir; ils prennent de la température, font moins de viande et celle-ci risque de se colorer malgré tout assez fortement.

L'animal est excité, consomme de l'énergie, d'où une forte baisse de rendement alimentaire.

En plus, il est bien connu que l'engraissement à base d'une alimentation exclusive de lait et, éventuellement, de matière grasses supplémentaires pose encore d'autres problèmes. La seule substance nutritive hydrocarbonée contenue dans la matière sèche du lait est le lactose qui est soit le seul glucide, soit le glucide essentiel.

Le lactose ne peut être assimilé par l'animal que s'il y a dans l'intestin une enzyme intestinale spécifique, à savoir la lactase (ou $\beta$-galactosidase) apte à catalyser la scission du lactose qui est chimiquement le 4-[$\beta$-galactosido]-glucose en D-galactose et D-glucose, seuls sucres assimilables. La lactase se trouve dans les cellules de la surface des villosités de l'intestin. Or, la fonction lactasique dont la valeur est propre à chaque animal présente l'inconvénient grave de décroître au fur et à mesure de l'avancement en âge ce qui rend finalement l'animal intolérant au lactose.

Cette fonction lactasique peut également être diminuée ou même disparaître passagèrement sous l'effet de causes pathologiques, affections intestinales par exemple, et elle est la dernière à réapparaître lorsque l'animal recouvre la santé.

Il en résulte une intolérance au lactose génératrice de mauvais résultats au niveau de l'élevage et ce d'autant plus si une partie du lactose non digéré est évacué par voie urinaire après passage dans le sang, le reste se retrouve dans le gros intestin.

La présence de lactose non digéré dans le gros intestin augmente la pression osmotique du fluide intestinal en provoquant un appel de l'eau des tissus vers la lumière intestinale avec tendance à la déshydratation de l'animal.

D'autres part, les sucres du lactose seront fermentés, par les bactéries dans le colon de l'intestin, en acides organiques et gaz carboniques d'où des phénomènes de diarrhées, d'intoxication intestinale et de coliques.

Selon les procédés d'alimentation connus à ce jour et utilisés en élevage, la capacité lactasique des animaux est saturée et la limite de digestibilité du lactose est atteinte.

On a attaqué ce côté du problème de l'alimentation aux produits laitiers uniquement, selon les propositions décrites dans le brevet français no. 2 506 131 en remplaçant au moins partiellement les substances laitières naturelles par un soi-disant «lacto-remplaceur» qui comporte une partie de glucose et une partie de galactose, associées à des matières grasses, et ce lacto-remplaceur s'obtient par hydrolyse enzymatique du lactose avant la formulation de l'aliment.

Cette proposition ne résout donc qu'une petite partie du problème global en ce qu'elle augmente seulement l'assimilabilité des sucres mais ne peut pas supprimer le fond du problème, à savoir la demande de l'animal de ruminer et les inconvénients de l'alimentation exclusive sur la base laitière. En plus, ce procédé ne résout pas un autre problème de cette technique d'engraissement, à savoir le fait que les produits fourragers à base de lait sont très chers.

L'administration aux veaux de la lactase comme seule enzyme ne permet pas une meilleure assimilation des autres constituants nutritifs.

Le brevet allemand DE-A 2 625 334 se rapporte à la préparation d'aliments de complément pour animaux. Les céréales germées sont traitées à l'eau chaude, et l'extrait aqueux est mis à réagir avec des microorganismes lactiques.

Le brevet US-A 1 554 913 se rapporte à un procédé dans lequel des graines de céréales trempées et maltées sont broyées pour en faire un aliment pour animaux. Au mélange malté et broyé, est ajouté de l'acide lactique comme agent de conservation. L'acide lactique peut être préparé par développement de bactéries lactiques sur du petit-lait ou une autre base lactique.

On a trouvé maintenant, de façon totalement inattendu, qu'on peut effectuer l'engraissement des veaux «blancs» de boucherie, en donnant aux animaux une alimentation constituée de substances laitières, éventuellement additionnées de protéines et/ou lipides non laitiers et, simultanément ou non, un aliment complémentaire composé de graines germées, fermentées et conservées à l'état humide par ensemencement en bactéries lactiques sélectionnées, de préférence en remplacement d'une partie de l'aliment à base de lait normalement utilisé pour l'engraissement des veaux de boucherie.

Il est surprenant de constater d'abord que la viande des veaux ainsi engraissés a la bonne apparence «blanche» désirée bien que l'aliment complémentaire, utilisé selon l'invention, est un produit non-laitier et est dérivé d'un produit de départ qui provoque inévitablement et dans tous les cas le début de rumination.

On a constaté en plus, de façon inattendue également, que l'aliment complémentaire utilisé selon l'invention fournit aux veaux une multitude d'enzymes ce qui améliore grandement la digestion de toute leur ration alimentaire, y compris les substances à base de lait.

L'aliment complémentaire utilisé selon l'invention est un produit de la germination et de la fermentation lactique de certaines céréales. Il peut être préparé par un procédé en plusieurs étapes. La première étape comprend la germination des graines; les graines de céréales, de préférence de l'orge, sont d'abord lavées puis mises à germer après un trempage ou bien sous apport constant d'eau; il pousse des tigelles et des radicelles de 0,5 cm et plus, en particulier d'au moins 1,5 cm. A ce stade de germination, le processus est stoppé ou au moins grandement réduit, et les graines sont conservées à ce stade par l'addition de bactéries lactiques. Il se développe des ferments lactiques acidifiant le milieu et le conservant. Le produit ainsi obtenu contient environ 35 à 60% d'eau et est prêt à l'utilisation; un séchage n'est pas recommandé car il détruit en partie certains composants qui sont décrits plus bas, et augmente le prix de produit.

Les céréales qui peuvent servir à la préparation de l'aliment complémentaire sont d'abord l'orge, puis le blé, l'avoine, le seigle, le froment, le maïs etc.; si l'invention est exécutée dans les pays produisant d'autres céréales apte à une germination suivie d'une fermentation lactique, par exemple le riz, le millet etc., ou si ces céréales sont à disposition à des prix abordables, de telles graines peuvent également être utilisées.

L'aliment complémentaire utilisé dans le procédé selon l'invention a des propriétés très avantageuses au point de vue de l'engraissement; on en citera les plus importantes:

1) Apport d'éléments nutritifs de haute valeur tels que des sucres, acides aminés, protéines et lipides prédigérés.

La germination s'accompagne de modifications de valeur nutritive, aussi bien au niveau des macro-éléments (glucides, protides, lipides) que des éléments ayant une activité biologique à faible dosage.

a) Les glucides complexes peu digestibles (à savoir l'amidon, la cellulose, les gommes, etc.) sont transformés en sucres assimilables (glucose, maltose, de nombreux oligosaccharides). A titre d'exemple, le taux de maltose du grain d'orge passe de 1 $^0/_{00}$ à plus de 55 $^0/_{00}$ après 7 jours de germination.

b) Les protéines sont transformées en acides aminés et oligopeptides facilement assimilables. On observe également une modification de la balance en acides aminés: le taux de lysine, assez faible dans l'orge non germée, augmente sensiblement au cours de la germination.

Le taux de l'hordéine et de glutéine (protéines complexes) est fortement réduit au profit de l'azote soluble:

*Teneur en % de la matière sèche*

|  | Orge | Orge germée |
|---|---|---|
| Hordéine | 0,631 | 0,261 |
| Glutéline | 0,509 | 0,376 |
| Azote soluble | 0,563 | 1,048 |

b) Les lipides sont transformés par une lipolyse en acides gras libres, sucres, choline, inoxitol, etc. L'enrichissement en choline et inoxitol est tout-à-fait intéressant lorsqu'on connaît leur rôle dans le métabolisme des graisses au niveau du foie.

2) Apport de minéraux, oligo-éléments, vitamines et autres facteurs indispensables sous une forme particulièrement bien assimilable.

a) Les minéraux et oligo-éléments inorganiques sont rendus plus assimilables par leur passage à l'état de complexes; par exemple les minéraux peuvent s'associer à un acide aminé ou une autre molécule similaire sous forme de chélate. C'est ainsi que le magnésium organique est 2,5 fois plus assimilable que le sulfate de magnésium, le cuivre organique 5,5 fois que le carbonate de cuivre et le fer organique 3 fois plus que le sulfate de fer.

D'autres part, la diminution du taux d'acide phytique permet d'augmenter la disponibilité du phosphore.

b) Les vitamines font également l'objet d'une néo-synthèse au cours de la germination. Ces vitamines naturelles sont placées dans un environnement biochimique adéquat et sont nettement plus assimilables pour l'animal que les vitamines de synthèse.

On observe en particulier une augmentation des teneurs en provitamines A, vitamine C, vitamine E et de nombreuses vitamines du groupe B comme en témoigne le tableau ci-dessous:

*Teneur en micro-grammes*
*par grammes de matière sèche*

|  | Orge | Orge germée |
|---|---|---|
| Vitamine B2 | 0,9 | 7,2 |
| Vitamine PP | 67,5 | 115 |
| Vitamine H | 0,32 | 0,91 |
| Vitamine B$^5$ | 5,4 | 10 |
| Vitamine B$^6$ | 0,2 | 0,5 |
| Acide folique | 14,5 | 50 |
| Vitamine B1 | 6,8 | 9 |

c) Enfin, par les trempages successifs qui accompagnent le processus de germination on observe une diminution des taux de métaux lourds (cuivre en particulier), tannins, coumarine et autres mycotoxines.

D'autres facteurs antinutritionnels (facteurs antitrypsiques en particulier) disparaissent au cours de la germination.

3) Apport de nombreuses enzymes qui renforcent la capacité de digestion de l'animal.

Toutes les transformations qui interviennent dans le grain d'orge tirent leur origine de la synthèse considérable d'enzymes au cours de la germination et de leur action sur les matières du réserve.

Cet apport d'enzymes naturelles et actives permet d'améliorer l'efficacité de la digestion.

De nombreux problèmes sanitaires ou digestifs, particulièrement chez les jeunes veaux ont pour origine une insuffisance de leur système enzymatique propre.

L'apport de l'aliment complémentaire utilisé selon l'invention permet donc d'améliorer la digestibilité des composants de la ration et évite les troubles liés à une insuffisance enzymatique («blocages digestifs»).

Le complex enzymatique de l'orge germée est composé le plus de 300 enzymes différentes.

Le procédé de conservation par la fermentation lactique qui suit celui de la germination, où les produits de la fermentation permettent de garder l'activité de ce complexe enzymatique. Le malt ainsi conservé présente une activité enzymatique supérieure au malt sec.

D'autre part, ces enzymes naturelles et complémentaires sont apportées dans un milieu biochimique idéal, avec tous les co-enzymes et éléments activateurs nécessaires.

4) Apport de bactéries lactiques viables, capables de se multiplier dans le tractus digestif. L'ensemblement permanent du milieu digestifs assure le maintien de l'équilibre de la flore intestinale.

En plus, comme effet synergique, on obtient une meilleure utilisation de la ration laitière principale.

L'orge une fois germée, est conservée à l'état humide par ensemencement par plusieurs souches de bactéries lactiques (lactobacilles et streptocoques lactiques).

Ces bactéries sont sélectionnées pour leur production d'acides lactique et leur effet conservateur. Certaines souches sont également capables de se multiplier dans le tube digestif des animaux.

5) Apport d'acide lactique et d'autres produits issus de la fermentation lactique qui améliorent l'hygiène digestive.

L'acide lactique issu de la fermentation des sucres par les bactéries lactiques a des propriétés diététiques certaines; par acidification du milieu intestinal, il inhibe certaines fermentations indésirables.

Des substances ayant des propriétés antimicrobiennes (acidoline, lactostrepsine,...) des vitamines du groupe B, des enzymes (lactase) et de nombreuses substances biologiquement actives sont libérées au cours de la fermentation lactique et viennent renforcer l'effet de l'aliment complémentaire sur l'hygiène digestive.

L'ensemencement en bactéries lactiques sélectionnées et la fermentation lactique qui s'ensuit permet également, hormis la mise en valeur alimentaire décrite ci-dessus, une conservation à l'état humide de l'aliment utilisé selon l'invention. Cette conservation est donc obtenue sans séchage, sans stérilisation, sans adjonction de conservateurs chimique pendant plusieurs mois.

La fermentation lactique lente qui continue, améliore encore le produit.

Le procédé décrit de conservation de l'aliment complémentaire permet de conserver intactes les propriétés alimentaires pendant plusieurs mois, comme en témoigne les analyses ci-dessous:

|                  | 2 semaines (g/kg) | 2 mois (g/kg) |
|------------------|-------------------|---------------|
| Humidité         | 558               | 559           |
| Protéines brutes | 69                | 68            |
| Cystine          | 2,6               | 2,9           |
| Methionine       | 1,8               | 2,0           |
| Lysine           | 4,8               | 6,3           |
| pH               | 4,03              | 3,97          |
| Sucres           | 33                | 65            |

Cependant, ce ne sont pas les seules propriétés avantageuses de l'aliment complémentaire; on a trouvé de manière surprenante également, que l'addition de l'aliment complémentaire à la rotation laitière des veaux ne leur donne non seulement pas envie de ruminer mais, à raison d'une consommation de 50 à 500 g par jour, diminue le système de rumination. Ceci est une propriété extrêmement importante du nouveau procédé. Dans l'engraissement normal, les tours de rumination sont en règle générale de 45 à 55 coups. Lorsqu'on donne l'aliment complémentaire, les animaux dépassent rarement 38 coups avec des minima se situant autour de 25 coups. On constate une absence de nervosité chez les veaux, un tour de rumination inférieur à 40 coups, d'où oxygénation insuffisante du bol alimentaire et obtention de viande blanche de belle présentation et ferme.

Si l'aliment a été décrit ci-dessous comme étant fabriqué à partir d'orge, il peut également être obtenu avec n'importe quelle autre graine de céréales.

Grâce à l'absence de nervosité chez les veaux, et à la valeur nutritive plus apte à l'assimilation (la digestion demande moins d'énergie), l'utilisation de la nourriture est améliorée, et l'on obtient des kilos de viande supplémentaire et à moindre frais.

L'application de l'aliment complémentaire peut se faire de l'engraissement au seau et de l'engraissement à la machine.

L'aliment complémentaire est utilisé selon l'invention comme lacto-remplaceur; les veaux substituent une partie de l'alimentation lactée par aliment complémentaire. Pour obtenir de bons résultats, on donne en moyenne environ 40 kg d'aliment complémentaire sur 140 kg de matières solides de lait. Cependant, ce rapport peut varier avec l'âge des veaux, leur race, les conditions de l'engraissement, etc.

Bien qu'on tire le maximum de profit des propriétés très avantageuses de l'aliment mentionné, on ne pouvait pas élever ou engraisser les animaux en utilisant cet aliment connu comme seule nourriture. En effet, les graines germées mentionnées ne contiennent pas assez de protéines pour que la nourriture soit en balance.

Cette constatation s'applique également à la nourriture classique des animaux, par exemple en herbe ou foin, et on a essayé de compenser les éléments nutritifs manquant en donnant aux animaux des tourteaux d'oléagineuses, par exemple de colza ou de soja. Cependant, ces tourteaux sont souvent mal digérés, et l'addition à la ration alimentaire de protéines bien digestibles ou bien des enzymes est dans tous les cas indispensable.

Selon FR-A 1 531 378, les tourteaux d'extraction de graines oléagineuses sont traités par le sérum de fromagerie et, après un premier développement enzymatique est ajoutée de la farine de céréales pour continuer la réaction enzymatique. Le produit est une poudre utilisable comme aliment pour animaux.

Un nouveau mélange, seconde objet de la présente invention, apporte aux organismes consommateurs le spectre le plus complet possible d'enzymes de métabolisme, activés par germination, en supprimant ou atténuant ainsi les lacunes des mélanges connus qui ne contiennent qu'une gamme limitée de ces enzymes.

On a maintenant trouvé, après de nombreuses recherches, un aliment amélioré et équilibré pour animaux de toute sorte, en particulier pour animaux utilitaires de ferme.

Les graines germées selon le second objet de l'invention sont des graines germées et fermentées de céréales en mélange avec des graines germées et fermentées de légumineuses, le mélange étant conservé à l'état humide par ensemencement d'au moins des graines germées de céréales, en bactéries lactiques sélectionnées pour leur production d'acide lactique et leur effet conservateur, ou/et par un acide.

Les graines de céréales que le mélange contient sont choisies parmi celles déjà mentionnées. On préfère actuellement l'orge.

Les graines de légumineuses, autre constituant majeur du mélange, peuvent être le pois, la lentille, le soja, la fève, la féverole, le haricot, l'arachide etc. On préfère actuellement le pois.

Le mélange selon l'invention peut contenir un ou plusiers représentants du groupe des céréales et un ou plusieurs représentants du groupe des légumineuses.

Le rapport entre les graines des deux groupes sera choisi en fonction de l'utilisation prévue, en prenant en considération la composition de ces graines en matières nutritives de base, donc en protéines, hydrates de carbone et matières grasses. Par exemple, un mélange qui se prête bien à l'alimentation de vaches laitières, est constitué de 40 à 60% de graines d'orge, le solde étant des graines de poids, ces graines sont germées, fermentées et conservées comme il sera décrit plus bas en plus de détail.

Le mélange selon l'invention peut être préparé de différentes façons. En principe, on peut partir d'un mélange des constituants, ou l'on peut traiter les différents groupes de graines séparément et les mélanger à n'importe quelle étape du procédé global. Chaque variante a ses avantages.

Etant donné que les conditions de germination et de fermentation peuvent être différentes pour les céréales et les légumineuses, dépendant des graines particulières choisies, on a généralement intérêt à opérer une germination séparée; par contre, il paraît que l'ensemblement en bactéries lactiques et la fermentation conservatrice donnent de meilleurs résultats lorsque les constituants se trouvent mélangés. Il à été trouvé, au moins pour le mélange de graines d'orge et de pois germées, que l'orge est plus accessibles à la fermentation lactique que le pois et sert en quelque sorte à ce dernier d'agent conservateur.

On peut remplacer totalement ou en partie l'ensemencement de bactéries lactiques par l'addition au mélange ou aux différentes sortes des graines d'un ou plusieurs acides tels que l'acide formique, acétique, propionique, lactique, sorbique, citrique, phosphorique etc. On peut également utiliser des sels acides tel que le dihydrophosphate monosodique. L'acide remplace ou complémente l'action conservatrice des bactéries lactiques. Il est clair qu'on utilisera que des acides autorisés et acceptables sur le plan alimentaire.

Pour la préparation du mélange selon l'invention, on peut par exemple procéder comme suit, le procédé comprenant plusieurs étapes.

La première étape comprend la germination des graines, exactement comme déjà décrit, les graines de céréales et de légumineuses pouvant être seules ou en mélange. Le mélange finalement obtenu après la dernière étape est de préférence un aliment complet ou complémentaire; il a, entre autres, les propriétés suivantes selon ce qui a pu être constaté:

1) Il apporte des éléments nutritifs de haute valeur dans une proportion bien équilibrée, à savoir sucres, amidon, acides aminés, protéines, lipides, matières grasses, le tout partiellement prédigéré, la germination s'accompagnant de modification de valeur nutritive, aussi bien au niveau des macro-éléments (glucides, protides, lipides) que des éléments ayant une activité biologique à faible dose.

2) Il apporte des minéraux, oligo-éléments, vitamines et autres facteurs indispensables sous une forme particulièrement bien assimilable. Il est d'ailleurs possible d'ajouter au mélange selon l'invention, si nécessaire, des additifs normalement acceptés dans le domaine alimentaire tels que vitamines, oligo-éléments, minéraux, antibiotiques etc.

3) Il apporte de nombreuses enzymes qui renforcent la capacité de digestion des animaux. Dans ce contexte, il est à noter que les céréales germées dans le mélange de l'invention peuvent être considérées comme facteur de sécurité, dans le sens que l'organisme supporte mieux les céréales en soi, et que l'état germé et fermenté de ces céréales, y compris leur acidité, assurent une meilleure digestion, une meilleure assimilation et une meilleure utilisation de l'autre constituant, par exemple des poids, ce qui peut se traduire par une diminution de consommation.

4) Il apporte en général des bactéries lactiques viables, capables d'agir dans l'intestin de l'organisme. L'ensemencement permanent du milieu digestif des animaux favorise le maintien de l'équilibre de la flore intestinale.

Le mélange, une fois germé, est conservé à l'état humide par ensemencement par un ou plusieurs souches de bactéries lactiques (lactobacillus et streptococcus lactique), sélectionnées pour leur production d'acide lactique et leur effet conservateur. La conservation est obtenue de cette façon sans séchage, sans stérilisation, sans adjonction d'agents conservateurs chimiques, pendant plusieurs mois. Cependant, on peut remplacer totalement ou partiellement les bactéries lactiques par un acide comme il est décrit ci-dessus.

5) Il apporte de l'acide lactique et d'autres produits issus de la fermentation lactique qui améliorent l'hygiène digestive.

Une analyse type d'un mélange selon l'invention, obtenue à partir des quantités égales d'orge et de pois, est la suivante (sous forme d'analyse partielle):

|  | Mélange selon l'invention | Orge germée seule |
|---|---|---|
| Matière sèche (% en poids) | 42,0 | 49,7 |
| cendres (g/kg m.s.*) | 32,0 | 23,1 |
| hydrates de carbone (g/kg m.s.*) | 64,0 | 65,0 |
| matières azotées digestibles (g/kg m.s.*) | 137,0 | 73,0 |
| graisses (g/kg m.s.*) | 16,0 | 23,0 |

m.s.* = matière sèche.

On voit que le mélange selon cet exemple apporte plus de minéraux et plus de matières azotées que l'orge germée seule; ce mélange peut donc constituer une nourriture complémentaire. Il a été trouvé que ce mélange augmente, lorsqu'il est donné à des vaches laitières comme aliment complémentaire à la nourriture d'été (herbe) et d'hiver (foin, silage), la qualité et la quantité du lait, et il assure un meilleur maintien de la courbe de lactation; l'aliment complémentaire égalise donc les hauts et les bas de la courbe de lactation en la rendant plus régulière.

Lorsqu'on veut incorporer des matières grasses au mélange, on utilisera des graines de soja à la place ou conjointement aux graines de pois. Par rapport aux seuls tourteaux de graines de soja, le mélange selon l'invention, comprenant de l'orge et du pois germés, a l'avantage que 1 kg du mélange peut remplacer à l'alimentation des vaches, 1 kg de tourteaux de soja, en apportant encore des protéines supplémentaires.

En plus, les soit-disantes «crises de foie», c'est-à-dire les dérangement digestifs des animaux, provoquent par une alimentation en tourteaux de graines de soja chez les porcs, sont totalement absentes lorsqu'on leur donne un mélange selon l'invention. Les tourteaux de soja et même les graines de soja non germées contiennent un facteur antitrypsique, responsable pour les troubles de digestion; or, ce facteur antitrypsique se trouve détruit, probablement au cours de la germination.

Le mélange selon l'invention comprend des graines à l'état humide. Il est généralement avantageux de les laisser telles quelles; l'ajout d'un agent de conservation n'est pas nécessaire car la fermentation lactique a déjà fourni assez d'acide lactique pour assurer une parfaite conservation. La teneur en humidité se trouve généralement entre 40 et 60%, normalement entre 50 et 60%. Elle peut être réglée à volonté. Il est également possible de mettre en œuvre le mélange plus ou moins complètement séché.

On préfère, comme il a été mentionné, un mélange d'orge et de pois. Les pois, soumis seuls au même procédé de germination et de fermentation lactique, ne sont pas conservés de manière absolument sûre car on suppose qu'il leur manque la quantité requise d'un substrat de cultivation des bactéries lactiques. Si l'on ajoute des sucres au début de la fermentation, la conservation est correcte. Les graines d'orge fermentées, présentes dans le mélange, jouent alors le rôle d'un substrat assurant la conservation.

Le rapport pondéral entre orge et pois — ou bien plus généralement entre céréales et légumineuses — peut être compris entre 30 : 70 et 99 : 1; il est de préférence, pour la plupart des utilisations, environ 50 : 50.

On décrira dans la description qui suit, le procédé et l'appareil selon l'invention pouvant servir à préparer les graines germées.

Le procédé est un procédé simple, économique et n'entraînant que le minimum de pertes, procédé qui comprend la germination en une seule étape, supprimant ainsi le stade de trempage.

L'appareil selon la présente invention est de construire une machine simple, peu coûteuse, robuste et fiable, adaptée à la mise en œuvre du procédé selon l'invention mais permettant également l'exécution de toute autre sorte de germination, par exemple pour préparer les semences aux semailles.

Les buts de l'invention sont remplis par le procédé et l'appareil réunissant les caractères des revendications indépendantes 10 et 16 tandis que l'application particulière envisagée est définie à la revendication indépendante 15.

Les modes de mise en œuvre ou de réalisation spéciales font l'objet des revendications dépendantes.

Dans le procédé de l'invention, on supprime d'abord l'étape de trempage. Ceci est un avantage important car cette étape demande l'utilisation de grandes quantités d'eau et des récipients volumineux, solides et dès lors coûteux. Il était également nécessaire de transporter le grain dans les cuves ou tours de trempage, de l'égoutter (ou le laisser égoutter) après trempage, et de le transporter dans une zone de germination, indépendamment du fait que le trempage était conçu de façon continue ou non.

La seconde simplification et amélioration est le fait que l'étape de germination est exécutée sans que le lit de grain soit soumis à une ventilation forcée, et elle se distingue en outre par l'absence d'une régulation de l'humidité de l'air. Il n'y a donc pas les organes, conduites éléments etc. nécessaires jusqu'à ce jour à cet effet. On a constaté avec étonnement que les pertes enregistrées jusqu'à présent dues à la respiration du grain au cours de la germination, se trouvent réduites à un minimum. En plus, il n'y a pas non plus des corps de chauffe pour le grain ou l'air de ventilation. Aucun ajout d'oxygène n'est effectué à l'air pendant la germination.

Les installations de ventilation sont chères, et leur utilisation est coûteuse car le rendement énergétique est d'ordre de quelques pour-cents seulement.

L'expression «restant dans une même position relative» dans la revendication 10 signifie que le lit de grains soumis à la germination est gardé stationnaire en ce qui concerne les grains; bien que le lit en soi puisse être déplacé en bloc, par exemple dans une installation sur plaque tournante, les grains restent stationnaires les uns par rapport aux autres.

L'homme du métier comprendra les avantages frappants du procédé de l'invention car aucune des publications, pourtant nombreuses dans ce domaine technique, ne suggère la suppression du trempage et/ou la mise en œuvre simplifiée, selon l'invention, de l'étape de germination dont la durée, pour citer un exemple, se trouve sensiblement réduite.

Dans la description qui suit, et dans laquelle d'autres avantages de l'invention sont mentionnés au fur et à mesure, on commence par l'explication d'une réalisation pratique de l'installation de germination, un des objets de l'invention, à l'aide du dessin dans lequel:

la fig. 1 est une vue de dessus de la partie principale de l'installation, et

la fig. 2 est une élévation latérale de l'installation selon la fig. 1, à une échelle plus grande cependant.

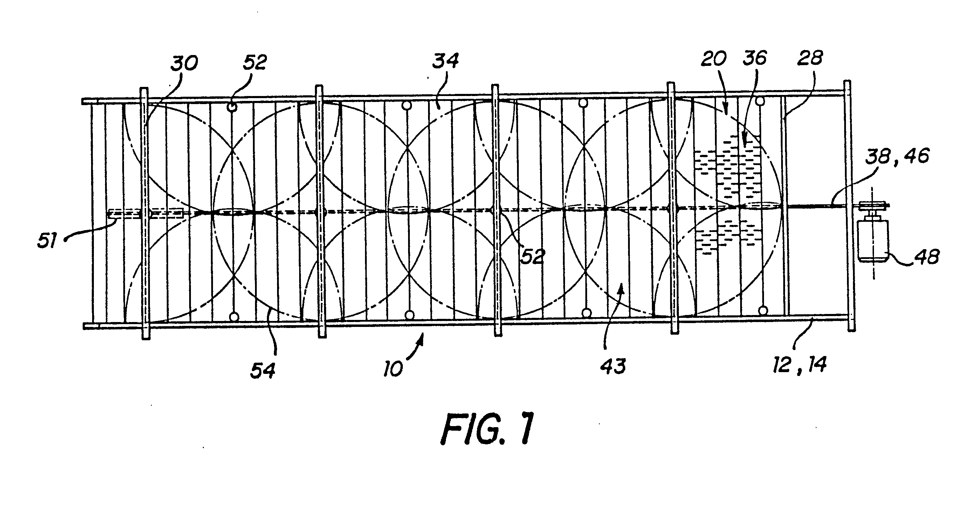

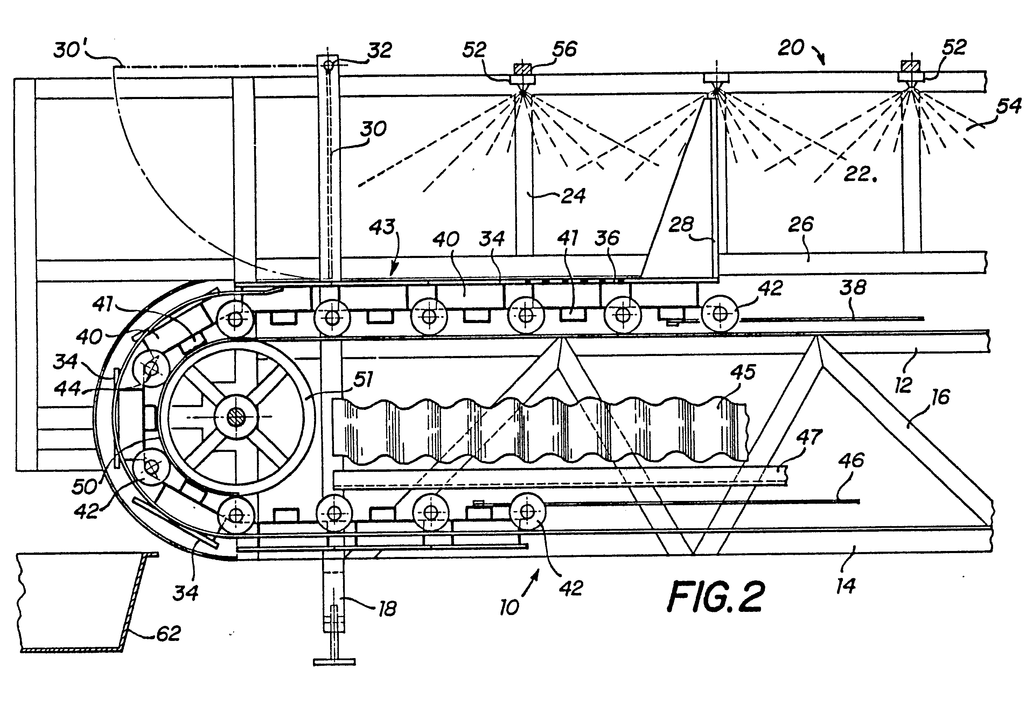

La machine 10 comprend un bâti léger mais solide; on s'est borné à représenter un longeron supérieur 12 et un longeron inférieur 14 ainsi que quelques rails de renforcement en diagonale 16 réunissant les longerons supérieur 12 et inférieur 14, des pieds 18, et un caisson 20 constitué essentiellement des panneaux latéraux en tôle d'acier, d'aluminium etc. ou en un autre matériau non toxique et résistant à l'humidité. Les panneaux latéraux sont fixés à une structure de profilés 24, 26 sous forme d'un cadre. Vers l'arrière qui est à droite dans les fig. 1 et 2, le caisson 20 est fermé par un panneau transversal mobile 28 tandis que la fermeture avant est constitué par un clapet 30 pivotable autour d'un axe 32 situé en haut du pied 18.

Le caisson 20 est ouvert vers le haut et vers le bas. Il comporte un fond à plaques articulées, constituant un tapis mobile.

Les plaques 34 sont des bandes plates et minces, disposés horizontalement, en métal ou en un autre matériau résistant mécaniquement et à l'eau. Les plaques 34 comportent des ouvertures 36, par exemple sous forme de fentes arrangées selon le sens de la flèche 38 et décalées latéralement l'une par rapport à l'autre.

Les plaques 34 sont réunies les unes aux autres par des chariots 40 munis de roulettes 42. L'arrangement est tel que chaque plaque 34 est supportée par deux fois deux roulettes 42, et que deux chariots ont un axe commun (par exemple 44). Cette construction est bien visible dans la fig. 2. L'enchaînement de tous les chariots 40 forme le tapis mobile 43 qui constitue le fond du caisson 20. Le tapis mobile 43 est relié par des câbles 38 et 46 à la poulie d'un moteur 48 qui sert à déplacer le tapis mobile 43 dans un sens et dans l'autre. Les roulettes 42 des chariots 40 reposent et roulent sur les longerons déjà décrits; lorsque le tapis se trouve immédiatement au-dessous du caisson 20 et forme le fond de celui-ci, les roulettes 42 s'appuient sur le longeron supérieur 12 tandis que, dans la position basse du tapis mobile 43, les roulettes 42 s'appuient sur le longeron inférieur 14. La transition entre les dits deux longerons est assurée par la périphérie d'un tambour ou d'une paire de rails cintrés 50; la ligne latérale la plus basse de ces rails 50 a une telle distance au longeron inférieur 14 que les roulettes 34 peuvent librement, mais sans trop de jeu, passer du tambour (ou des rails cintrés) 50 au longeron inférieur 14, voir la fig. 2 pour les détails.

La roue 51 est montée au milieu entre les deux rails cintrés 50. Elle sert à guider le câble 46 quand le tapis mobile 43 est dans sa position de travail. La roue 51 sert également d'appui à des supports 41 dont chaque chariot 40 en comporte un à son milieu, lorsque le chariot 40 effectue sa rotation cintré. La roue 51 peut tourner librement ou peut être entraînée par des moyens non représentés.

Des gicleurs pour liquide 52 sont placés au-dessus du caisson 20, dirigés vers le bas, et cela aux bords du caisson 20 et au milieu des traverses 56. Un dispositif collecteur comprenant la surface ondulée 45 et le chéneau 47 se trouve au-dessous du tapis mobile 43, à savoir au-dessous du fond du caisson 20, et le chéneau 47 est incliné vers un réservoir (non représenté) comprenant une pompe de circulation, un filtre, éventuellement un échangeur de chaleur, et des conduites reliant la sortie de la pompe aux gicleurs. Tous ces éléments, étant courants et connus de l'homme du métier, ne sont pas représentés.

Le fonctionnement de l'installation sera décrit maintenant. Cette description servira également d'exemple d'exécution du procédé et de son application à la fabrication d'un produit de départ du «Germasil».

L'installation, dans la réalisation décrite, a une longueur du caisson 20 de 8 m et une largeur de 2,5 m. Au départ, le tapis mobile 43 de fond est tiré par le treuil 48 de façon que la paroi mobile 28 se trouve à un mètre environ du clapet 30 qui est baissé et verrouillé dans la position de fermeture.

On commence alors à remplir le caisson 20 des grains à faire germer, par exemple de l'orge.

Le grain est lavé auparavant dans une installation de lavage en soi connue. Le lavage préalable est nécessaire pour que tous les grains soient bien mouillés et le restent pendant l'arrosage. On préfère porter le grain juste avant le chargement à une température facilitant l'absorption de l'eau et le début de germination.

De préférence, les étapes de chargement et de prélavage sont combinées lorsqu'on utilise un dispositif à vis d'Archimède (non représenté) sur lequel on fait couler de l'eau. Cette vis ne sera pas déplacée pendant tout le chargement. Lorsque l'espace du caisson 20 entre le clapet frontal 30 et la paroi mobile 28 sera remplie, on déplace le tapis mobile 43 vers la droite (en faisant marcher le moteur 48), on remplit de nouveau l'espace libre, et ainsi de suite jusqu'au remplissage total du caisson 20. Une porte racleuse (non représentée), insérée depuis le haut dans le caisson sert à obtenir une épaisseur du lit de grains constante. De préférence, on étale le grain dans le caisson 20 jusqu'à ce qu'on obtient un lit de grain ayant une épaisseur de 0,25 à 0,33 m. Cette valeur n'est qu'un exemple et sera adaptée aux conditions particulières du travail dans une installation donnée. Dans l'exemple donné, la charge était de 3000 kg de grain environ.

Après ce chargement, le réservoir d'eau d'arrosage ayant été rempli, la pompe de circulation est mise en marche. L'eau du réservoir est amenée aux gicleurs 52 qui débitent des gouttes d'eau; ces gouttes descendent sur le lit de grains et mouillent les grains. Le champ de couverture par les gouttes d'eau provenant de chaque gicleur est indiqué par les cercles pleins ou partiels 54 (fig. 1); on place donc les gicleurs 52 (ou règle leur champ d'action) de telle façon qu'il y aura le recouvrement approprié en vue d'un mouillage le plus uniforme possible des grains du lit dans le caisson 20.

Cette particularité permet alors le déroulement optimal de la germination et la minimisation des pertes dues surtout à une germination trop lente. Les procédés et installations de l'état de la technique ne connaissent pas cette idée; dans ces procédés et installations, on ne peut pas régler la vitesse des réactions, ne serait-ce d'une manière non précise. Les seuls moyens prévus à cet effet dans la technique antérieure sont le brassage des grains, par exemple son transfert à un autre convoyeur, ou la régulation de la température et de l'humidité de l'air de ventilation. Or, ces moyens sont inaptes à fonctionner de façon efficace, l'air ayant une chaleur spécifique très basse.

Par contre, dans le procédé selon l'invention, on peut parfaitement régler, par des moyens très simples, la vitesse de germination sans remuer ou transverser les grains du lit, uniquement en choisissant la température de l'eau en circulation. On n'a pas besoin de ventilateurs puissants et des humidificateurs compliqués de 'létat de la technique, l'invention ne demande qu'une simple pompe de circulation de liquide et un filtre pour éviter l'obstruction des buses d'arrosage.

Au cours du procédé de l'invention, on porte la température du lit de grain rapidement à 15°C environ ou à une température un peu plus élevée, en arrosant le lit avec un excès d'eau ayant une température appropriée. Ensuite, lorsqu'on continue à apporter de l'eau d'arrosage, on règle la température du lit à 20-22°C. En effet, il a été constaté que la germination se déroule d'une façon suffisamment rapide à cette température, et les réactions biochimiques «annexes» telles que respiration, fermentations et formation de moisissure sont suffisamment lentes dans cette plage de température.

La quantité de l'eau distribuée par arrosage sur le lit de grain, donc son débit, peut être variée dans de larges limites. On préfère cependant maintenir un débit minimum tel qu'il y a écoulement du lit et reflux au réservoir car dans ces conditions seulement on est sûr que le taux d'humidité (ou d'absorption d'eau dans les grains) est pratiquement le même sur la hauteur du lit. Si l'eau ne s'égouttait pas, on risquerait que les grains du fond du lit restent quasiment secs car les couches supérieures auraient utilisé toute l'eau disponible.

La température de l'eau en circulation, plus précisément de l'eau arrivant sur les grains, peut être réglée par la mise en œuvre de l'échangeur de chaleur déjà mentionné, ou bien, de façon plus simple et dans des installations plus petites, en utilisant de l'eau froide ou chaude comme complément dans le réservoir. En effet, il faut pratiquement continuellement ajouter de l'eau au réservoir ce qui est dû à la consommation par les grains du lit et à l'évaporation.

On a constaté, de façon surprenante, que la germination commence peu de temps après le début de l'arrosage. On pense que ce fait est dû à la simultanéité de l'arrosage dans l'air ambiante fournissant l'oxygène nécessaire. Dans les étapes de tremage par immersion connues, cet oxygène est absent. Le mode de travail selon l'invention est unique par rapport aux procédés connus.

La germination est continuée pendant 48 à 54 heures, jusqu'à ce que les germes formées ont une longueur voulue, par exemple un tiers à deux tiers de la longueur moyenne d'un grain. Pendant toute cette germination, le lit de grain n'est ni brassé, ni retourné, ni autrement dérangé. Vers la fin de la durée de germination, on peut arrêter d'ajouter de l'eau au réservoir. Par cette mesure, on obtient un réservoir vide, et toutes les substances lessivées ou déchargées dans l'eau en circulation restent dans le lit de grain; il s'agit généralement de substances précieuses telles que vitamines, sels minéraux, enzymes etc. On n'a, en plus, pas de liquide à vider.

On comprendra une autre particularité de l'invention lorsqu'on compare la durée de germination selon l'invention, qui est de 48 à 54 heures seulement, à celle des procédés de germination et de maltage connus; il s'agit là de 5 à 7 jours. Cette courte durée du procédé de l'invention présente de nombreux avantages tels que meilleure utilisation des installations et réduction sensible des pertes dues à la respiration des grains pendant la germination et à la formation de moisissures.

Afin de régler autrement la vitesse de germination et de réduire encore le risque de formation de moisissures, on peut ajouter des substances auxiliaires à l'eau en circulation, par exemple des sels, vitamines, enzymes, produits tensio-actifs, désinfectants etc.; on citera des composés gibberelliques comme substances auxiliaires connues en soi, aptes à abréger le temps de germination.

Un autre grand avantage du procédé de l'invention réside dans le fait qu'il peut fonctionner avec un minimum d'eau. Il y a des endroits où l'on désire installer un appareil de germination mais où l'on manque d'eau. On a constaté que, de façon surprenante, le procédé de l'invention peut être conduit avec une consommation d'eau d'environ 1,5 litres par kg de grains germés (comprenant une humidité de 12 à 15% en poids au début, et de 50 à 55% en poids à la fin de la germination), tandis que, aux mêmes taux d'humidité, les procédés connus utilisent 4 à 5 litres d'eau par kg de grains. En plus, le procédé de l'invention est normalement conduit de façon à finir sans eau en excès; de cette façon, on évite la présente d'une quantité d'eau plus ou moins grande qui ne peut en aucun cas être déversée dans l'égout car elle est une solution relativement concentrée de matières biologiques.

A la fin de germination, l'installation doit être vidée. Pour cela, on met en marche le moteur 48 (fig. 1), mais en sens inverse, et le tapis mobile entame un mouvement selon la flèche 46 (fig. 2). Auparavant, on a ouvert le clapet frontal 30 en le pivotant dans la position 30'. Les grains germés tombent devant les plaques perforées 34 au fur et à mesure de l'avancement du tapis mobile, et on aura soin de placer des bacs ou d'autres récipients 62 devant la machine. Le produit germé récupéré sera traité ultérieurement selon besoin.

A ce stade, il faut noter un autre grand avantage de l'installation selon l'invention. Comme on a déjà décrit ci-dessus, le caisson à germination sera rempli de grains de façon très simple, sans qu'on ait besoin de constructions et convoyeurs spéciaux, mobiles et coûteux. La décharge se fait d'une manière pareillement simple et peu coûteuse.

En ce qui concerne les grains à faire germer, il s'agit de toutes sortes de céréales telles que l'orge, le blé, le seigle, l'avoine, le maïs, le millet, le sorgho etc., même d'autres grains tels que les petits pois, les lentilles, les fèves, les haricots, les oléagineux tels que le soja etc., seuls ou en mélange avec les céréales. L'orge et le mélange orge-petits pois sont les plus typiques.

Le procédé et l'installation décrits peuvent subir des modifications et adaptations et peuvent être complétés selon besoin ou nécessité. Par exemple, on peut prévoir une couverture sur le caisson afin de protéger son contenu au cours de la germination, par exemple contre la lumière. On peut disposer les grains sur une plaque tournante qui fait un tour complet en 48 à 54 heures, la plaque étant chargée et déchargée en continu. On peut automatiser et programmer le déroulement du procédé en utilisant les moyens et méthodes mis à disposition de l'homme du métier au cours des toutes dernières années, etc.

La paroi frontale 30 peut être pivotable ou complètement amovible.

Les dimensions des gouttelettes d'eau d'arrosage, pulvérisée sur le lit de grains, seront choisies telles que la formation d'un brouillard est évitée. Ceci peut être accompli par le choix approprié de la pression hydraulique et les dimensions ou la construction des gicleurs. Des petites gouttes bien réparties donnent le meilleur résultat d'absorption d'eau par les grains.

Les grains germés selon l'invention peuvent aussi être utilisés pour fabriquer des boissons maltées et des extraits de malt.

L'exemple suivant illustre l'utilisation de l'aliment complémentaire.

*Exemple*

Un troupeau de veaux est engraissé selon la technique «libre service» où les veaux mangent à volonté à n'importe quel moment.

Ils arrivent à l'age de 15 jours. On leur donne immédiatement 40 g d'aliment complémentaire par jour et par tête. Pour cela, on met à disposition dans une ou plusieurs auges faisant au moins 3 m de long, 2 kg de l'aliment pour un troupeau de 50 veaux.

10 jours après, les animaux ayant 25 jours, 60 à 80 g d'aliment complémentaire sont mangés facilement pour atteindre 100 g par jour au but de 30 jours.

A partir de 30 jours, on compte 100 g d'aliment par jour et par bête, pour atteindre 400 g à la fin du 2ème mois.

Puis, 60 jours à la fin de l'engraissement, 500 à 700 g par jour et par veau. Des consommations de l'ordre de 800 g à 1 kg même peuvent se produire, et l'on donne aux veaux en finition l'aliment complémentaire jusqu'au dernier jour.

Le principe de l'application est d'adapter la distribution de l'aliment complémentaire en fonction des besoins alimentaires de chaque veau. Le veau réglera par lui-même sa consommation au fur et à mesure de son engraissement.

On a constaté les résultats suivants:

| | Engraissement aux produits à base de lait exclusivement | Engraissement avec l'aliment complémentaire |
|---|---|---|
| Nombre de veaux du départ | 76 | 76 |
| Pertes | — | — |
| Consommation de l'aliment complémentaire par veau | — | 56 kg |
| Nombre de jours d'engraissement | 94 | 91 |
| Gain quotidien moyen par veau | 1403 g | 1485 g |
| Indice de consommation du lait *) | 1,57 | 1,37 |
| Indice de consommation *) de l'aliment complémentaire | — | 0,11 |
| Indice total de consommation *) | 1,57 | 1,48 |

*) On entend par indice de consommation la quantité de l'aliment en kg nécessaire pour faire 1 kg de viande, par rapport au même prix de revient.

On voit immédiatement les avantages de procédé de l'invention se rapportant au rendement.

**Revendications**

1. Mélange de graines germées, contenant des graines germées et fermentées de céréales et des graines germées et fermentées de légumineuses, le mélange étant conservé à l'état humide par ensemencement d'au moins des graines germées de céréales, en bactéries lactiques choisies pour leur production d'acide lactique et leur effet conservateur, ou/et par un acide.

2. Mélange de graines germées selon la revendication 1, caractérisé en ce que les graines de céréales sont choisies parmi l'orge, le blé, le maïs, l'avoine, le seigle, le riz, le millet, le sorgho.

3. Mélange de graines germées selon la revendication 1, caractérisé en ce que les graines de légumineuses sont choisies parmi le pois, la lentille, le soja, la fève, la féverole, le haricot, l'arachide.

4. Mélange de graines germées selon la revendication 1, caractérisé en ce que les graines de légumineuses sont les graines de pois, et que les graines de céréales sont les graines d'orge.

5. Graines de céréales germées, fermentées et conservées à l'état humide par ensemencement en bactéries lactiques sélectionnés pour leur production d'acide lactique et leur effet conservateur, en tant qu'aliment complémentaire d'une nourriture lactique pour veaux de boucherie.

6. Graines germées selon l'une au moins des revendications précédentes, caractérisées en ce que les graines germées et fermentées sont conservées par une ou plusieurs souches de bactéries lactiques choisies parmi les lactobacillus et les streptocoques lactiques.

7. Utilisation des graines germées selon l'une au moins des revendications précédentes comme aliment pour animaux de ferme.

8. Procédé d'engraissement des veaux de boucherie, caractérisé en ce qu'on donne aux animaux une alimentation constituée de substance laitières éventuellement additionnées de protéines et/ou lipides non laitières et, simultanément ou non, un aliment complémentaire selon la revendication 5 ou 6.

9. Procédé selon la revendication 8, caractérisé en ce que l'aliment complémentaire comprend les graines germées selon la revendication 6.

10. Procédé pour la germination de graines, caractérisé en ce qu'on soumet un lit de graines prélavées à l'action d'eau d'arrosage pulvérisée sur la surface du lit jusqu'au stade de germination voulu, les graines restant dans une même position relative pendant la germination, et la germination se faisant en une seule étape sans apport forcé d'air et sans étape séparée de trempage, la régulation des conditions de la germination étant effectuée par le debit et la température de l'eau d'arrosage.

11. Procédé selon la revendication 10, caractérisé en ce qu'on recycle l'eau d'arrosage, et l'on complète dans le circuit l'eau consommée par les graines et par évaporation.

12. Procédé selon la revendication 10 ou 11, caractérisé en ce que le lit de graines est rapidement porté à une température de 15°C au moins, au moyen d'un arrosage par un excès d'eau à température élevée, et l'on maintient une température comprise entre 20 et 22°C pendant le restant de la germination.

13. Procédé selon l'une au moins des revendications 10 à 12, caractérisé en ce qu'on diminue graduellement l'apport d'eau vers la fin du procédé.

14. Procédé selon l'une ou plusieurs des revendications 10 à 13, caractérisé en ce qu'on ajoute à l'eau d'arrosage au moins un additif choisi parmi des agents tensio-actifs acceptés du point de vue alimentaire, des composés gibberelliques, des sels minéraux, des vitamines, des enzymes et des biocides sélectifs n'entravant pas la germination.

15. Application du procédé selon l'une des revendications 10 à 14 à la fabrication des céréales germées ou de mélanges contenant des céréales germées, en vue de leur transformation en produits fourragers lacto-remplaceurs.

16. Installation de germination de graines, notamment de graines de céréales, pour la mise en œuvre du procédé selon les revendications 10 à 14, comprenant un caisson apte à recevoir un lit de graines à faire germer, ayant des parois longitudinales stationnaires mais un fond et des parois frontale et arrière mobiles dont la mobilité est destinée à effectuer le chargement et le déchargement, la paroi frontale étant pivotable ou amovible, la paroi arrière étant fixée au fond mobile, et comprenant sur la partie supérieure du caisson des dispositifs d'arrosage agencés à arroser en continue le dit lit de graines.

17. Installation selon la revendication 16, caractérisée en ce que le fond mobile du caisson est constitué par des plaques transversales munies d'ouvertures d'écoulement, les plaques étant fixées chacune sur un chariot à roulettes, les roulettes étant guidées par un longeron supérieur et un longeron inférieur montés au-dessous du dit caisson, le tapis mobile constitué par l'ensemble des plaques et chariots étant agencé pour être inséré au-dessous du caisson en tant que fond, et pour être retiré du dit caisson.

18. Installation selon la revendication 17, caractérisée en ce que les roulettes sont arrangées de façon que l'axe arrière de chaque chariot constitue l'axe avant du prochain chariot.

19. Installation selon l'une des revendications 16 à 18, caractérisée en ce qu'elle comprend également un réservoir pour l'eau d'arrosage en circulation, une conduite d'amenée d'eau d'ajout, une pompe de circulation et le dispositif d'arrosage, et éventuellement un échangeur de chaleur pour chauffer ou refroidir l'eau de circulation.

20. Installation selon l'une ou plusieurs des revendications 16 à 19, caractérisée en ce que le dispositif d'arrosage est constitué par une pluralité de gicleurs aptes à délivrer des gouttelettes d'eau.

21. Installation selon la revendication 19 ou 20, caractérisée par une surface collectrice de l'eau qui s'égoutte du tapis mobile, et un chéneau conduisant cette eau au réservoir, ces éléments étant situés au-dessous du caisson.

**Patentansprüche**

1. Gemisch gekeimter Körner, enthaltend gekeimte und fermentierte Getreidekörner und gekeimte und fermentierte Leguminosenkörner, wobei sich das Gemisch in feuchtem Zustand infolge Inokulation mindestens der gekeimten Getreidekörner mit Milchsäurebakterien, die im Hinblick auf die Erzeugung von Milchsäure und ihre konservierenden Wirkungen ausgesucht sind, und/oder durch Zugabe einer Säure, in haltbarem Zustand befindet.

2. Gemisch gekeimter Körner nach Anspruch 1, dadurch gekennzeichnet, dass die Getreidekörner aus Gerste, Weizen, Mais, Hafer, Roggen, Reis, Hirse und Sorghum ausgewählt sind.

3. Gemisch gekeimter Körner nach Anspruch 1, dadurch gekennzeichnet, dass die Leguminosenkörner aus Erbsen, Linsen, Soja, Puffbohnen, kleinen Saubohnen, Bohnen und Erdnüssen ausgewählt sind.

4. Gemisch gekeimter Körner nach Anspruch 1, dadurch gekennzeichnet, dass als Leguminosen Erbsen und als Getreide Gerstenkörner vorliegen.

5. Gekeimte, fermentierte und in feuchtem Zustand durch Inokulation mit Milchsäurebakterien, die im Hinblick auf Milchsäureerzeugung und Konservierungswirkung ausgesucht sind, haltbar gemachte Getreidekörner als Zusatzfuttermittel zu einem Milchfutter für Schlachtkälber.

6. Gekeimte Körner nach mindestens einem der vorstehenden Ansprüche, dadurch gekennzeichnet, dass die gekeimten und fermentierten Körner durch einen oder mehrere Milchsäurebakterienstämme, ausgewählt aus Lactobazillen und Milchsäure-Streptokokken, konserviert sind.

7. Verwendung der gekeimten Körner nach mindestens einem der vorstehenden Ansprüche als Futtermittel für Nutzvieh.

8. Verfahren zum Mästen von Schlachtkälbern, dadurch gekennzeichnet, dass man den Tieren eine Nahrung verabreicht, die aus Milchbestandteilen besteht und die gegebenenfalls mit Proteinen und/oder Lipiden angereichert ist, die nicht aus Milch stammen, und ihnen gleichzeitig oder zeitlich getrennt ein Zusatzfutter nach Anspruch 5 oder 6 verabreicht.

9. Verfahren nach Anspruch 8, dadurch gekennzeichnet, dass das Zusatzfutter aus den gekeimten Körnern nach Anspruch 6 besteht.

10. Verfahren zur Keimung von Körnern, dadurch gekennzeichnet, dass die Oberfläche einer Schicht aus gewaschenen Körnern bis zum gewünschten Keimungsstadium mit Giesswasser besprüht wird, wobei die Körner gegeneinander in Ruhe gehalten werden und die Keimung einstufig ohne besondere Luftzufuhr und ohne getrennte Weichstufe erfolgt, und dass die Regelung der Keimungsbedingungen durch den Durchsatz und die Temperatur des Giesswassers bewirkt wird.

11. Verfahren nach Anspruch 10, dadurch gekennzeichnet, dass das Giesswasser in Kreislauf geführt wird, wobei die Wasserabnahme infolge Verbrauch durch die Körner und die Verdampfung im Kreislauf ergänzt wird.

12. Verfahren nach Anspruch 10 oder 11, dadurch gekennzeichnet, dass die Körnerschicht durch Begiessen mit einem Überschuss an Wasser von erhöhter Temperatur schnell auf eine Temperatur von mindestens 15°C gebracht wird, und dass während der restlichen Keimungsphase eine Temperatur im Bereich von 20 bis 22°C aufrechterhalten wird.

13. Verfahren nach mindestens einem der Ansprüche 10 bis 12, dadurch gekennzeichnet, dass der Wasserzusatz gegen das Ende der Keimungsphase nach und nach vermindert wird.

14. Verfahren nach einem oder mehreren der Ansprüche 10 bis 13, dadurch gekennzeichnet, dass dem Giesswasser mindestens ein Zusatz einverleibt wird, ausgewählt aus lebensmittelzulässigen Tensiden, Gibberellinverbindungen, Mineralsalzen, Vitaminen, Enzymen und selektiven, die Keimung nicht störenden Bioziden.

15. Anwendung des Verfahrens nach einem der Ansprüche 10 bis 14 zur Herstellung von gekeimtem Getreide oder solches enthaltenden Gemischen, zwecks Weiterverarbeitung zu Milchersatz-Futtermitteln.

16. Vorrichtung zur Keimung von Körnern, insbesondere Getreide, zur Ausführung des Verfahrens nach Anspruch 10 bis 14, die einen Kasten zur Aufnahme einer Schicht zu keimender Körner aufweist, welcher feste Längswandungen und einen beweglichen Boden sowie eine bewegliche Vorder- und Rückwandung besitzt, deren Beweglichkeit zur Vornahme der Beladung und Entladung dient, wobei die Vorderwand schwenkbar und wegnehmbar ist, und die am oberen Bereich des Kastens Bewässerungseinrichtungen zum kontinuierlichen Begiessen der genannten Körnerschicht aufweist.

17. Vorrichtung nach Anspruch 16, dadurch gekennzeichnet, dass der bewegliche Boden des Kastens aus Querplatten mit Ablauföffnungen besteht, wobei jede Platte an einem Wagen mit Rollen befestigt ist und die Rollen durch einen oberen und einen unteren Längsträger geführt sind, welche unterhalb des genannten Kastens angeordnet sind, und wobei das durch die Platten und Wagen gebildete bewegliche Band zum Einfahren in den unteren Bereich des Kastens als dessen Boden und zum Ausfahren aus dem Kasten eingerichtet ist.

18. Vorrichtung nach Anspruch 17, dadurch gekennzeichnet, dass die Rollen so angeordnet sind, dass die Hinterachse jedes Wagens gleichzeitig die Vorderachse des folgenden Wagen ist.

19. Vorrichtung nach einem der Ansprüche 16 bis 18, dadurch gekennzeichnet, dass sie weiterhin einen Behälter für umlaufendes Giesswasser, eine Leitung zum Zuführen des Zusatzwassers, eine Umwälzpumpe und die Begiesseinrichtung sowie gegebenenfalls einen Wärmetauscher zum Erwärmen oder Abkühlen des umlaufenden Giesswassers aufweist.

20. Vorrichtung nach einem oder mehreren der Ansprüche 16 bis 19, dadurch gekennzeichnet, dass die Begiesseinrichtung aus einer Vielzahl von Sprühköpfen, die Wassertröpfchen erzeugen, besteht.

21. Vorrichtung nach Anspruch 19 oder 20, gekennzeichnet durch eine Sammelfläche für das vom beweglichen Band abtropfende Wasser und einen Kanal, der das gesammelte Wasser zum Behälter führt, wobei diese Teile unterhalb des Kastens angeordnet sind.

## Claims

1. Mixture of germinated grains, comprising germinated and fermented cereal grains und germinated and fermented legume grains, said mixture being preserved in humid condition by seeding of at least the germinated cereal grains with lactic bacteria selected for their lactic acid production and their preserving action, or/and by an acid.

2. Mixture of germinated grains according to claim 1, characterised in that the cereal grains are selected from barley, wheat, maize, oat, rye, millet and sorgo.

3. Mixture of germinated grains according to claim 1, characterised in that the legume grains are selected from peas, lentils, soya, beans, broad beans, kidney beans and peanuts.

4. Mixture of germinated grains according to claim 1, characterised in that the legume grains are pea grains, and that the cereal grains are barley grains.

5. Germinated and fermented cereal grains, preserved in humid condition by seeding with lactic bacteria selected for their lactic acid production and their preserving action, as a complementary food to a milk based feed for fat stock calves.

6. Germinated grains according to at least one of the preceding claims, characterised in that the germinated and fermented grains are preserved by one or several lactic bacteria strains selected from lactobacillus and lactic streptococcus.

7. Use of the germinated grains according to at least one of the preceding claims as a feed for farm animals.

8. Process for fattening fat stock calves, characterised in that the animals are given a milk solids based feed optionally containing non-milk proteins and/or lipids, and, simultaneously or not, a complementary food according to claim 5 or 6.

9. Process according to claim 8, characterised in that the complementary food comprises the germinated grains according to claim 6.

10. Process for the germination of grains, characterised in that a bed of pre-washed grains is submitted to the action of perfusion water sprayed upon the surface of said grain bed until the desired germination state is reached, the grains remaining at the same mutual position during the germination step, the germination being effected in one sole step without forced supply of air and without a separate soaking step, the control of the germinating conditions being accomplished by the flowrate and the temperature of the perfusing water.

11. Process acording to claim 10, characterised in that the perfusion water is recycled, and that the water consumed by the grains and by evaporation is replenished in the circuit.

12. Process according to claim 10 or 11, characterised in that the temperature of the bed of grains is rapidly raised to at least 15°C by means of a perfusion by excess water at elevated temperature, and that a temperature comprised between 20 and 22°C is maintained during the remainder of the germination step.

13. Process according to at least one of claim 10 to 12, characterised in that the water flow rate is decreased towards the end of the process.

14. Process according to one or more of claims 10 to 13, characterised in that at least one additive selected from tensides allowed for foodstuffs, gibberellic compounds, mineral salts, vitamines, enzymes and selective biocides not impairing germination, is added to the perfusion water.

15. Application of the process according to any one of claims 10 to 14 for the manufacture of germinated cereals or of mixtures containing same, for the purpose of their transformation into milk replacement feed products.

16. Grains germination device, particularly for cereal grains, for implementing the process according to claims 10 to 25, comprising a container capable of receiving a bed of grains to germinate, the container having stationary side walls but a mobile bottom and mobile front and rear walls whose mobility is destined for the loading and unloading, the front wall being pivotable or removable and the rear wall being fixed to the mobile bottom, and comprising at the upper portion of the container perfusion means adapted to continuously watering said bed of grains.

17. Device according to claim 16, characterised on that the mobile bottom of the container is formed by transversal plates fitted with drain openings, each plate being fixed to a wheeled carriage, the wheels being guided by an upper side rail and a lower side rail which are mounted below the said container, the mobile plate belt formed by the set of plates and carriages being adapted to be inserted under the container as its bottom, and to be removed from said container.

18. Device according to claim 17, characterised in that the wheels are adapted such that the rear axle of each carriage is the front axle of the next carriage.

19. Device according to any one of claims 16 to 18, characterised in that it further comprises a tank for the circulating perfusion water, a conduit for water to be added, a circulation pump and the perfusion device, and optionally a heat exchanger for heating or cooling the circulating water.

20. Device according to one more of claims 16 to 19, characterised in that the perfusion device is formed by a plurality of spray nozzles adapted to supply water droplets.

21. Device according to claim 19 or 20, characterised by a collecting surface for the water draining from the mobile plate belt, and a gutter for bringing the water to the tank, these means being placed under the container.

FIG. 1

FIG.2